# EUROPÄISCHE PATENTSCHRIFT

(11) **EP 2 024 952 B1**
(45) Veröffentlichungstag und Bekanntmachung des Hinweises auf die Patenterteilung: **02.12.2009**
(21) Anmeldenummer: 07720161.4
(22) Anmeldetag: 24.05.2007
(51) Int. Cl.: G09B 15/00, G09B 19/00

(54) **VORRICHTUNG FÜR MUNDSTÜCKÜBUNGEN FÜR EIN HOLZBLASINSTRUMENT**
DEVICE FOR MOUTHPIECE EXERCISES FOR A WOODWIND INSTRUMENT
DISPOSITIF POUR EXERCICES D'EMBOUCHURE POUR LES INSTRUMENTS DE LA FAMILLE DES BOIS

(30) Priorität: 08.06.2006 CH 928062006
(43) Veröffentlichungstag der Anmeldung: 18.02.2009
(73) Patentinhaber: Jancic, Silvin M., 5612 Villmergen (CH)
(72) Erfinder: Jancic, Silvin M., 5612 Villmergen (CH)
(74) Vertreter: Spierenburg, Pieter
(86) Internationale Anmeldenummer: PCT/CH2007/000264
(87) Internationale Veröffentlichungsnummer: WO 2007/140637

(56) Entgegenhaltungen:
- BE-A1- 889 500
- DE-A1- 4 304 904
- DE-A1- 19 722 045
- US-A- 4 378 724
- US-A- 6 085 864
- US-B1- 6 401 860

## Beschreibung

Die Erfindung bezieht sich auf eine Vorrichtung für Mundstückübungen zur Reduktion der Lautstärke beim Erlernen und Üben des Anblasens eines Holzblasinstrumentes, insbesondere eines Saxophons oder einer Klarinette.

Für Bläser solcher Holzblasinstrumente mit einfachem Rohrblatt ist es wichtig, seinen Ansatz ständig zu trainieren und weiter zu entwickeln. Bisher brauchte man für solche Übungen das ganze Instrument, was sowohl mit einem gewissen Aufwand als auch mit relativ grosser Lautstärke verbunden war, und sich dadurch auch für die Umgebung sehr störend auswirkte, besonders dann, wenn sie in bewohnten Räumen stattfanden. Zur Reduktion der Lautstärke sind Schalldämpfer bekannt, die auf das Instrument aufsetzbar oder in das Instrument einsetzbar sind. Die Veröffentlichung BE 889 500 offenbart einen derartigen Schalldämpfer, der zwischen Mundstück und Ansatzrohr eines Saxophons einsetzbar ist. Neue Lehrmethoden, die sehr erfolgreich und in Fachkreisen anerkannt sind, schreiben Übungen vor, bei denen der Lernende seinen Ansatz nur mit dem Mundstück des Holzblasinstrumentes übt, also ohne Korpus. Dadurch wird ein rasch fortschreitender Lernerfolg erzielt. Der Nachteil dieser Methode ist jedoch, dass diese Übungen nicht nur mit erheblicher Lautstärke verbunden sind, sondern dass insbesondere bei Anfängern die Töne schrill klingen und dadurch diese Übungen von den Mitmenschen als sehr störend empfunden werden.

Es ist daher die Aufgabe der vorliegenden Erfindung, eine Vorrichtung für Mundstückübungen zum Erlernen und Üben des Anblasens eines Holzblasinstrumentes zu schaffen, die es ermöglicht, Übungen nur mit dem Mundstück des Instruments mit gedämpfter Lautstärke durchzuführen.

Diese Aufgabe wird von einer Vorrichtung für Mundstückübungen zum Erlernen und Üben des Anblasens eines Holzblasinstrumentes mit den Merkmalen des Anspruchs 1 gelöst.

Die Grundidee dieser Lösung ist, einen Dämpfer in das Mundstück des Holzblasinstrumentes einzustecken, der die beim Üben erzeugten Töne dämpft und ein Spielen in einer für die Umgebung angenehmen Lautstärke ermöglicht.

Weitere Vorteile der Erfindung folgen aus den abhängigen Patentansprüchen und aus der nachfolgenden Beschreibung, in welcher die Erfindung anhand von in den Zeichnungen dargestellten Ausführungsbeispielen näher erläutert wird.

Es zeigen:
- Fig. 1: einen Querschnitt durch ein Mundstück eines Holzblasinstrumentes mit eingestecktem Dämpfer, schematisch dargestellt;
- Fig. 2: einen Dämpfer, in einer Teil-Schnittzeichnung;
- Fig. 3: die erfindungsgemässe Vorrichtung mit einer zweiten Ausführung eines Dämpfers;
- Fig. 4: die erfindungsgemässe Vorrichtung mit einer weiteren Ausführung des Dämpfers;
- Fig. 5 und 6: die erfindungsgemässe Vorrichtung gemäss Figur 1 mit einer Rohrverbindung zwischen den inneren Kammern.
- Fig. 7: einen Dämpfer, in einer Teil-Schnittzeichnung mit geschlitztem Anschlussteil.

In den Figuren sind für dieselben Elemente jeweils dieselben Bezugszeichen verwendet worden und erstmalige Erklärungen betreffen alle Figuren, wenn nicht ausdrücklich anders erwähnt.

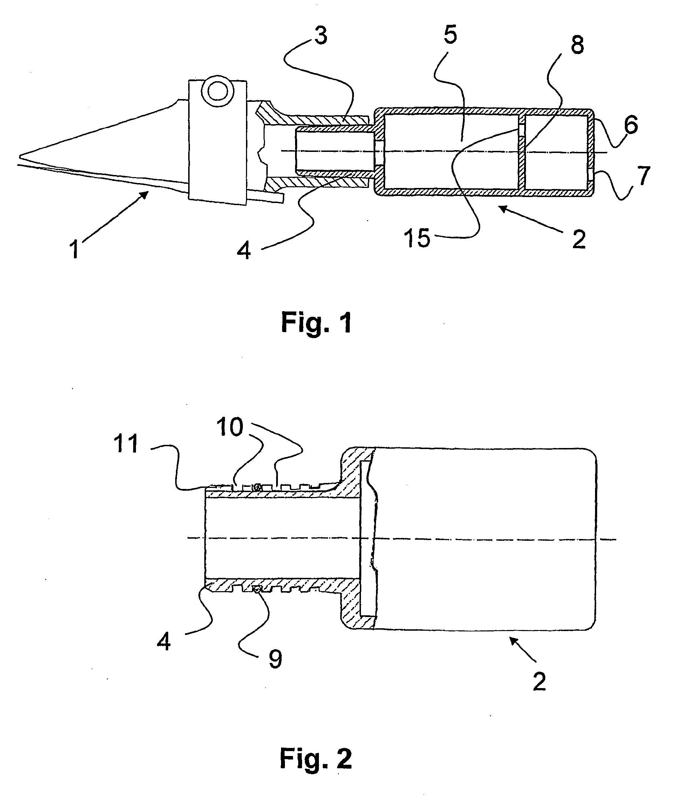

Die Figur 1 zeigt einen Querschnitt durch eine erste beispielsweise Ausführung der erfindungsgemässen Vorrichtung für Mundstückübungen zum Erlernen und Üben des Anblasens eines Holzblasinstrumentes. Die Vorrichtung besteht aus einem Mundstück 1 eines Holzblasinstrumentes und einem in die Mundstücköffnung 3 eingesteckten Dämpfer 2. In der schematischen Darstellung sind die dem Fachmann bekannten Einzelheiten des Mundstücks 1 des Blasinstrumentes nicht dargestellt. Der Dämpfer 2 weist an seinem dem Mundstück 1 zugewandten Ende einen rohrförmigen Abschnitt auf, der den Anschlussteil 4 an das Mundstück 1 bildet und dessen Aussendurchmesser etwa dem Innendurchmesser der Mundstücksöffnung 3 entspricht, so dass der Anschlussteil 4 in die Mundstücksöffnung 3 dichtend einsteckbar ist. Dem Anschlussteil 4 folgt der zur Schalldämpfung dienende Abschnitt mit dem Hohlraum 5 des Dämpfers 2. Das dem Anschlussteil 4 des Dämpfers 2 gegenüber liegenden Ende 6 weist eine Luft- bzw. Schallaustrittsöffnung 7 auf. Das Innere 5 des Dämpfers 2 ist je nach Ausführung unterschiedlich gestaltet und dient der Schalldämpfung. Zu diesem Zweck sind im Inneren 5 des Dämpfers 2 zusätzliche Mittel zur Schalldämpfung eingebaut. Im gezeigten Beispiel ist der Hohlraum 5 des zylindrisch gestalteten Dämpfers 2 mittels einer Trennwand 8 in zwei Kammern unterteilt, die über ein oder mehrere Löcher oder Verbindungskanäle 15 in der Trennwand miteinander verbunden sind. Der Saxophon- oder Klarinettespieler kann mit der erfindungsgemässen Vorrichtung seine Mundstückübungen zum Anblasen in normaler Spielweise aber ohne Instrumentenkorpus und in gedämpfter Lautstärke ausführen. Die Grösse, das Dämpfers 2 im gezeigten Beispiel liegt etwa in der Grössenordnung des Mundstücks 1. Die Vorrichtung ist daher einfach und leicht zu transportieren und zu handhaben und auch leicht zu reinigen. Der Dämpfer 2 kann jedoch so gestaltet sein, dass er wesentlich grösser oder aber auch kleiner als das Mundstück 1 ist.

Die Holzblasinstrumente in den unterschiedlichen Tonlagen weisen unterschiedlich grosse Mundstücke 1 auf, d.h. die Mundstücksöffnungen 3 haben unterschiedliche Durchmesser. Um dieser Tatsache gerecht zu werden, gibt es unterschiedlich grosse Dämpfer 2 mit verschiedenen Durchmessern ihres rohrförmigen Abschnitts 4, die den jeweiligen für sie bestimmten Instrument angepasst sind. Aber auch Mundstücke 1 gleicher Grösse, also Mundstücke 1 für Holzblasinstrumente gleicher Tonlage weisen geringfügig unterschiedliche Mundstücksöffnungen 3 auf. Um solche geringfügigen Abweichungen im Durchmesser der Mundstücksöffnung 3 auszugleichen, weist der rohrförmige Abschnitt 4 an seiner Aussenfläche einen leicht konischen Verlauf auf, der sich vom Dämpfer 2 in Richtung Mundstück 1 hin verjüngt.

In der Figur 2 ist ein Dämpfer 2 in einer Teilschnitt-Zeichnung dargestellt. In dieser Ausführung weist der rohrförmige Abschnitt parallel angeordnete O-Ring Nuten 10 auf, in welche ein O-Ring 9 einsetzbar ist. Diese O-Ring Nuten sind unterschiedlich tief. Die Einschnitt-Tiefe der einzelnen Nuten 10 nimmt von der Vorderkante des Rohrabschnittes 4 von Nut zu Nut ab. Ein in die vorderste Nut eingesetzter O-Ring weist demnach einen geringeren Aussendurchmesser auf als ein in die benachbarte Nut in Richtung Dämpfergehäuse eingesetzter O-Ring, da er tiefer in der Nut liegt. Mit der entsprechenden Wahl einer Nut mit darin eingesetztem O-Ring kann der Dämpfer 2 jeweils an die Mundstücksöffnung 3 individuell und optimal angepasst werden. Eine an der Oberfläche des rohrförmigen Abschnitts 4 in axialer Richtung verlaufende Rille 11 erleichtert das Auswechseln beziehungsweise das Versetzen eines O-Rings 9 in eine andere Nut 10. Mit einem dünnen Gegenstand, wie beispielsweise einem Schraubenzieher, fährt man längs der Rille 11 unter den O-Ring 9 und hebt diesen aus der Nut 10, um ihn anschliessend zu entfernen oder in eine benachbarte tiefere oder eine weniger tiefe Nut wieder einzusetzen.

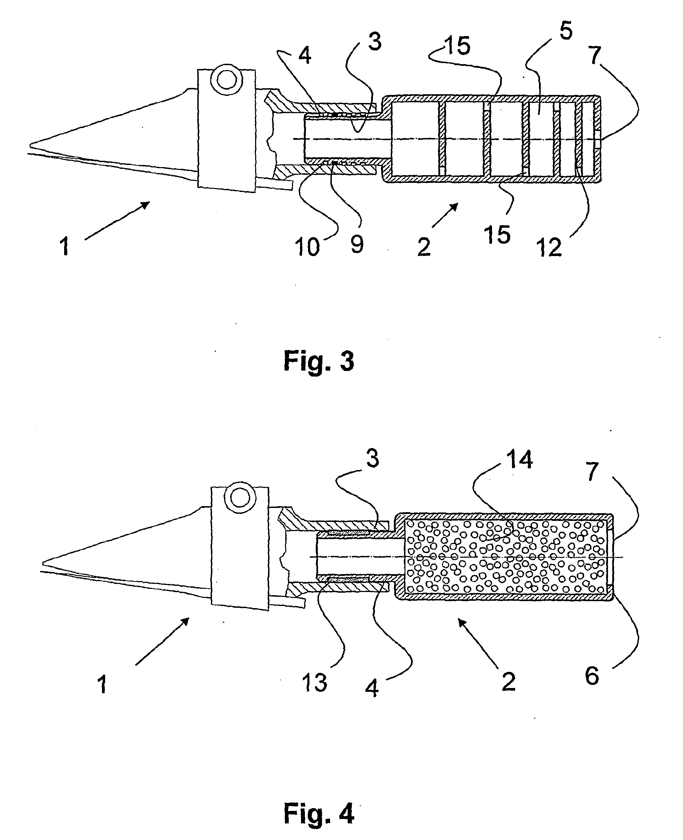

Die Figur 3 zeigt die erfindungsgemässe Vorrichtung in einer zweiten Ausführung. Der in die Mundstücköffnung 3 des Mundstücks 1 eingesteckte Dämpfer 2 weist an seinem rohrförmigen Abschnitt 4 parallel angeordnete O-Ring Nuten 10 mit einem in eine Nut 10 eingesetzten O-Ring 9 auf. Der O-Ring hält den . Dämpfer 2 dichtend im Mundstück 1 fest. Im Inneren des Dämpfers 2 sind etwa senkrecht zur Längsachse zwei oder mehrere Dämpfelemente 12 an der Innenwand des Dämpfers 2 angeordnet, die den Innenraum 5 in Kammern unterteilen, wobei jedes Element mindestens an einer Stelle seines Umfangs die Innenwand des Dämpfers 2 nicht berührt und so einen Durchgangskanal 15 zwischen den Kammern bildet, sodass Luft zwischen dem Dämpfelement 12 und der Innenwand des Dämpfers 2 hindurchströmen kann. Vorteilsweise sind die Dämpfelemente 12 im Inneren 5 des Dämpfers 2 so angeordnet, dass bei benachbarten Dämpfelementen 12 der Freiraum zwischen Dämpfelement 12 und der Innenwand bzw. der Durchgangskanal 15 jeweils zueinander versetzt ist. Das Gehäuse des Dämpfers 2 kann unterschiedliche Formen wie beispielsweise zylinderförmig, , kugelförmig oder auch quaderförmig sein. Bei einem quaderförmigen Gehäuse sind die Dämpfelemente 12 zum Beispiel Trennwände,
die jeweils nicht an allen vier Seiten mit der Innenwand verbunden sind. Der Luftstrom umströmt vom Eintritt durch den Anschlussteil 4 her kommend ein Dämpfelement 12 - also eine Trennwand - nach dem anderen bis er durch die Austrittsöffnung 7 aus dem Dämpfer 2 wieder austritt. Für den mit dem Mundstück erzeugten Ton bewirkt diese Anordnung eine Schalldämpfung, was sich in einer stark reduzierten Lautstärke eines mit dem Mundstück 1 erzeugten Tons auswirkt.

In der Figur 4 ist eine weitere beispielsweise Ausführung der erfindungsgemässen Vorrichtung gezeigt. Der leicht konisch geformte rohrförmige Anschlussteil 4 ist in seinem vorderen Bereich 13 mit einer dünnen Korkschicht überzogen. Durch die konische Form des Rohrabschnitts 4 und den elastischen und dichtenden Eigenschaften von Kork ist der in die Mundstücksöffnung 3 eingesteckte Dämpfer 2 dichtend und fest im Mundstück 1 gehalten. Das Innere 5 des Dämpfers 2 ist mit einem schalldämmenden und luftdurchlässigen Material gefüllt, wie beispielsweise schaumstoffartige oder polsterwatteartige Materialien, oder poröse Sintermetalle. Der Dämpfer 2 ist in der Praxis mehrteilig aufgebaut, was in den schematischen Darstellungen nicht gezeigt ist, so dass die Füllung zum Reinigen oder Austauschen herausnehmbar ist.

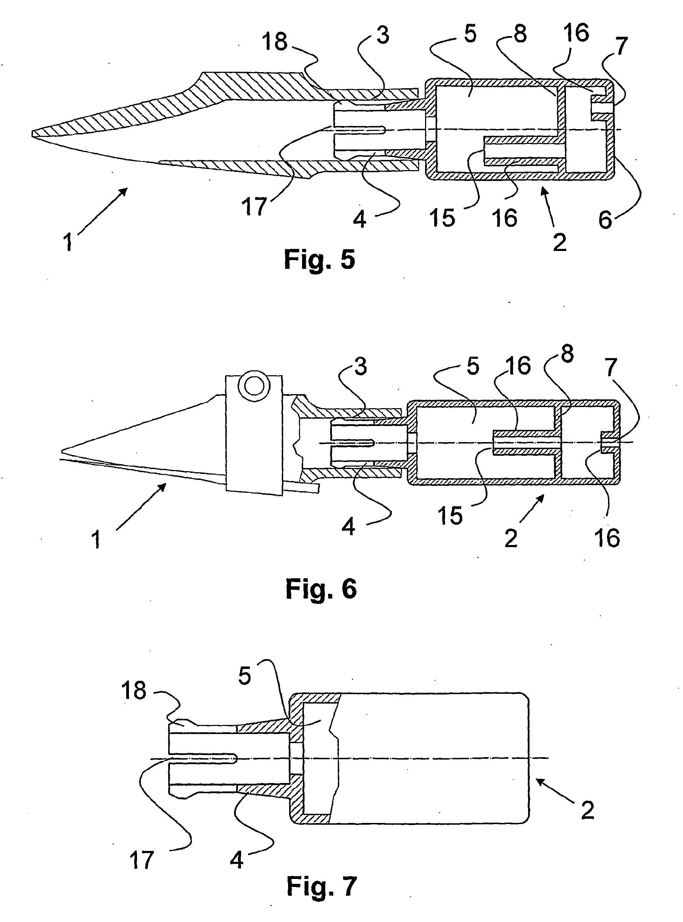

Die Figuren 5 und 6 zeigen Ausführungsformen der erfindungsgemässen Vorrichtung, die im Wesentlichen der Ausführungsform der Figur 1 entsprechen. Im Inneren 5 des Dämpfers 2 ist eine Trennwand 8 angeordnet, welche den Innenraum 5 in zwei Kammern unterteilt. Die Kammern sind über den Durchgangskanal 15 miteinander verbunden. Beim Spielen strömt so die Luft vom Mundstück 1 über den Anschluss 4 in die erste Kammer und von dort über den Durchgangskanal 15 in die zweite Kammer und tritt schliesslich durch die Austrittsöffnung 7 aus dem Dämpfer 2 aus. Der Durchgangskanal 15 sowie die Austrittsöffnung 7 weisen rohrförmige Abschnitte 16 auf, die in die durch die Trennwand 8 im Innern des Dämpfers 2 gebildeten Kammern ragen. Der Durchgangskanal 15 und die Austrittsöffnung 7 sind in Bezug auf die Längsachse des Dämpfers 2 versetzt angeordnet. Sie können aber auch bezüglich der Längsachse hintereinander in einer Achse angeordnet sein, wie das in Figur 6 gezeigt ist. Denkbar sind auch Ausführungsformen, welche mehrere Trennwände 8 mit ein oder mehreren rohrförmigen Durchgangskanälen 15 aufweisen und die jeweils bezüglich der Längsachse zueinander versetzt sind.

In der Figur 7 ist ein Dämpfer 2 in einer Teil-Schnittzeichnung schematisch dargestellt. Der Dämpfer 2 weist ein mit einem konische verlaufenden und mit Längsschlitzen 17 versehenen Anschlussteil 4 auf. Der Aussendurchmesser des Anschlussteils 4 verjüngt sich vom Dämpfer 2 hin zur Mündung des Anschlussteils 4. Im Bereich der Mündung weist der Anschlussteil 4 eine ringförmigen Verdickung 18 auf, so dass der Aussendurchmesser des Anschlussteils 4 an der Mündung etwa gleich dick oder geringfügig dicker ist, als an seinem anderen Ende, dem Übergang zum Dämpfer 2 und entspricht etwa dem Innendurchmesser der Mundstücksöffnung 3. Aufgrund der Längsschlitze 17 ist der vordere Abschnitt des Anschlussteils 4 elastisch und kann beim Einstecken in die Mundstücksöffnung 3 in radialer Richtung leicht zusammengedrückt werden, so dass der Anschlussteil 4 in die Mundstücksöffnung 3 dichtend einsteckbar ist. In der Zeichnung sind vier Schlitze 17 eingezeichnet. Denkbar sind sowohl mehr als auch weniger Schlitze. Wichtig ist, dass die vorderen Enden des Anschlussteils 4 radial elastisch federnd zusammendrückbar sind, und so die ringförmige Verdickung 18 ebenso wie das hintere Ende des Anschlussteils 4 satt an der Innenwand der Mundstücköffnung 3 anliegt. Dadurch hat der Dämpfer 2 einen guten Halt im Mundstück 1 und kann leicht eingesetzt und einfach vom Mundstück 1 wieder abgezogen werden.

Die in den Figuren gezeigten schematischen Darstellungen sind lediglich beispielsweise Ausführungen. In der Praxis ist der Dämpfer mehrteilig verschraubt oder gesteckt zusammengesetzt, so dass der Dämpfer 2 zum Reinigen in einzelne Teile zerlegbar ist. Zu diesem Zweck kann beispielsweise das hintere Ende 6 des Dämpfers 2 über eine Gewindeverbindung mit dem Dämpfergehäuse verbunden sein und die Trennwand 8 mit den Durchgangskanal 15 ist in den Dämpfer einsetzbar ausgebildet.

Mit der Erfindung wird erreicht, dass Mundstückübungen mit einem Mundstück eines Holzblasinstruments wie einer Klarinette oder einem Saxophon ohne Korpus ausgeführt werden können, wobei die Töne in angenehmer Lautstärke gehört werden. Die erfindungsgemässe Vorrichtung eignet sich daher bestens als Lernhilfe für Anfänger und auch als Übungsgerät für fortgeschrittene Saxophon- und Klarinettespieler. Den Ansatz und weitere musikalische Ausdrucksmittel kann man so ohne übermässige Lautstärke und ohne Lärmbelästigung effektiv trainieren.

## Patentansprüche

1. Vorrichtung für Mundstückübungen zum Erlernen des Anblasens eines Holzblasinstrumentes mit einfachem Rohrblatt, insbesondere eines Saxophons oder einer Klarinette, bestehend aus einem Mundstück (1) eines Holzblasinstruments und einem in das Mundstück (1) einsteckbaren Dämpfer (2), der an seinem dem Mundstück (1) zugewandten Ende einen rohrförmigen Abschnitt (4) aufweist, dessen Aussendurchmesser etwa dem Innendurchmesser der Mundstücköffnung (3) entspricht, so dass der Rohrabschnitt (4) in die Mundstücköffnung (3) dichtend einsteckbar ist, und einen daran anschliessenden Abschnitt mit einem der Schalldämpfung dienenden Hohlraum (5), welcher Mittel (12, 14,15,16) zur Schalldämpfung aufweist.

2. Vorrichtung nach Anspruch 1, **dadurch gekennzeichnet, dass** der rohrförmige Abschnitt (4) an seiner Aussenfläche einen leicht konischen, sich vom Dämpfer (1) in Richtung Mundstück (1) hin verjüngenden Verlauf aufweist.

3. Vorrichtung nach Anspruch 2, **dadurch gekennzeichnet, dass** der rohrförmige Abschnitt (4) parallel angeordnete und jeweils unterschiedlich tiefe O-Ring Nuten (10) aufweist, in welche ein O-Ring (9) einsetzbar ist.

4. Vorrichtung nach Anspruch 2, **dadurch gekennzeichnet, dass** der leicht konisch geformte, rohrförmige Abschnitt (4) des Dämpfers (2) in seinem vorderen Bereich (13) mit einer dünnen Korkschicht überzogen ist.

5. Vorrichtung nach Anspruch 2, **dadurch gekennzeichnet, dass** der leicht konisch geformte, rohrförmige Abschnitt (4) des Dämpfers mit Längsschlitzen (17) versehen ist, und im Bereich der Mündung eine ringförmigen Verdickung (18) aufweist, derart dass der Aussendurchmesser des Anschlussteils (4) an der Mündung etwa gleich dick ist, wie an seinem anderen Ende.

6. Vorrichtung nach einem der Ansprüche 1 bis 5, **dadurch gekennzeichnet, dass** die im Innern (5) des Dämpfers (2) zur Schalldämpfung eingebauten Mittel Trennwände (8) sind, die den Innenraum (5) des Dämpfers (2) in Kammern unterteilen, welche über Durchgangskanäle (15) miteinander verbunden sind.

7. Vorrichtung nach Anspruch 6, **dadurch gekennzeichnet, dass** die Durchgangskanäle (15) durch Rohrabschnitte (16) gebildet sind.

8. Vorrichtung nach einem der Ansprüche 1 bis 6, **dadurch gekennzeichnet, dass** das Innere (5) des Dämpfers (2) zur Schalldämpfung mit einem porösen, schalldämmenden und luftdurchlässigen Material gefüllt ist.

## Claims

1. A device for mouthpiece exercises for learning to play a woodwind instrument having a single reed, in particular a saxophone or a clarinet, comprising a mouthpiece (1) of a woodwind instrument and a damper (2), which is insertable into the mouthpiece (1), and has a tubular section (4) on its end facing toward the mouthpiece (1), whose external diameter approximately corresponds to the internal diameter of the mouthpiece opening (3), so that the tube section (4) is insertable into the mouthpiece opening (3) to form a seal, and an adjoining section having a cavity (5) used for noise damping, which has means (12, 14, 15, 16) for noise damping.

2. The device according to Claim 1, **characterized in that** the tubular section (4) has a lightly conical shape, which tapers from the damper (1) in the direction of the mouthpiece (1), on its outer surface.

3. The device according to Claim 2, **characterized in that** the tubular section (4) has O-ring grooves (10), which are situated in parallel and each have different depths, and in which an O-ring (9) is insertable.

4. The device according to Claim 2, **characterized in that** the lightly conically shaped tubular section (4) of the damper (2) is covered using a thin cork layer in its front area (13).

5. The device according to Claim 2, **characterized in that** the lightly conically shaped tubular section (4) of the damper is provided with longitudinal slots (17), and has an annular thickened area (18) in the area of the mouth, such that the external diameter of the attachment part (4) is approximately equally thick at the mouth as at its other end.

6. The device according to one of Claims 1 through 5, **characterized in that** the means installed in the interior (5) of the damper (2) for noise damping are partition walls (8), which divide the inner chamber (5) of the damper (2) into chambers, which are connected to one another via through channels (15).

7. The device according to Claim 6, **characterized in that** the through channels (15) are formed by tubular sections (16).

8. The device according to one of Claims 1 through 6, **characterized in that** the interior (5) of the damper (2) for noise damping is filled with a porous, noise-damping, and air-permeable material.

## Revendications

1. Dispositif pour exercices d'embouchure pour apprendre à souffler dans un instrument à vent à anche simple, en particulier un saxophone ou une clarinette, composé d'une embouchure (1) d'instrument à vent et d'un silencieux (2) pouvant être inséré dans l'embouchure (1), qui présente à son extrémité opposée à l'embouchure (1) un segment tubulaire (4) dont le diamètre extérieur est à peu près égal au diamètre intérieur de l'ouverture d'embouchure (3), de sorte que le segment tubulaire (4) peut être inséré de façon étanche dans l'ouverture d'embouchure (3), et présente à sa suite un segment comportant une cavité (5) servant à atténuer les sons, qui comporte des moyens (12, 14, 15, 16) pour atténuer les sons.

2. Dispositif selon la revendication 1, **caractérisé en ce que** le segment tubulaire (4) présente sur sa surface extérieure une forme légèrement conique se resserrant à partir du silencieux (1) en direction de l'embouchure (1).

3. Dispositif selon la revendication 2, **caractérisé en ce que** le segment tubulaire (4) présente des gorges de joint torique (10) parallèles et de profondeur différente, dans lesquelles un joint torique (9) peut être introduit.

4. Dispositif selon la revendication 2, **caractérisé en ce que** le segment tubulaire (4) légèrement conique du silencieux (2) est recouvert dans sa partie antérieure (13) d'une mince couche de liège.

5. Dispositif selon la revendication 2, **caractérisé en ce que** le segment tubulaire (4) légèrement conique du silencieux est muni de fentes longitudinales (17) et présente au niveau de l'embouchure un épaississement annulaire (18), de telle façon que le diamètre extérieur du raccord (4) au niveau de l'embouchure a sensiblement la même épaisseur qu'à son autre extrémité.

6. Dispositif selon l'une des revendications 1 à 5, **caractérisé en ce que** les moyens intégrés à l'intérieur (5) du silencieux (2) pour atténuer les sons comprennent des cloisons de séparation (8) qui partagent l'intérieur (5) du silencieux (2) en chambres reliées entre elles par des canaux de passage (15).

7. Dispositif selon la revendication 6, **caractérisé en ce que** les canaux de passage (15) sont formés par des segments tubulaires (16).

8. Dispositif selon l'une des revendications 1 à 6, **caractérisé en ce que** l'intérieur (5) du silencieux (2) est rempli afin d'amortir les sons d'un matériau poreux, insonorisant et perméable à l'air.
